# EUROPÄISCHE PATENTSCHRIFT

(11) **EP 0 652 039 B1**
(45) Veröffentlichungstag und Bekanntmachung des Hinweises auf die Patenterteilung: **18.09.1996**
(21) Anmeldenummer: 94117481.5
(22) Anmeldetag: 05.11.1994
(51) Int. Cl.: B01D 53/50

(54) **Waschturm für eine Rauchgasentschwefelungsanlage**
Washing tower for a flue gas desulphurisation system
Colonne de lavage pour une installation de désulfurisation de gaz de fumée

(30) Priorität: 10.11.1993 DE 4338332
(43) Veröffentlichungstag der Anmeldung: 10.05.1995
(73) Patentinhaber: Gottfried Bischoff GmbH & Co. KG, 45136 Essen (DE)
(72) Erfinder: Risse, Theo, D-59368 Werne (DE); Giepen, Günther, D-45481 Mülheim (DE); Böhm, Hildemar, D-45968 Galdbeck (DE); Kleeberg, Matthias, Dr., D-45468 Mühlheim (DE)
(74) Vertreter: Albrecht, Rainer Harald, Dr.-Ing.

(56) Entgegenhaltungen:
- WO-A-81/00843
- DE-A- 2 829 077
- DE-C- 3 227 187
- US-A- 4 047 891
- US-A- 4 389 351
- US-A- 4 913 819
- ENGINEERING. (INCL. MACHINE SHOP MAGAZINE), Nr.11, Dezember 1988, LONDON GB Seiten 620 - 628, XP000005504 P. TAFFE 'The big clean-up'

## Beschreibung

Die Erfindung betrifft einen Waschturm für eine Rauchgasentschwefelungsanlage mit einer von Rauchgas durchströmten und mit Waschflüssigkeit beaufschlagten Absorptionszone, mit einem unter der Absorptionszone angeordneten Waschflüssigkeitssumpf, mit einem horizontalen Rost von Sauerstoffzuführleitungen in dem Waschflüssigkeitssumpf, der eine Oxidationszone oberhalb des Rostes und eine Reaktionszone unterhalb des Rostes trennt, mit einer Einrichtung für die Zuführung von Additiven in die Reaktionszone des Waschflüssigkeitssumpfes, mit einer Einrichtung für die Waschflüssigkeitsrückführung aus dem Waschflüssigkeitssumpf in die Absorptionszone und mit einer zusätzlichen, an den Waschflüssigkeitssumpf angeschlossenen Umwälzeinrichtung, wobei aus der Reaktionszone eine hauptsächlich aus Calciumsulfat bestehende Suspension ausschleusbar ist und wobei die Umwälzeinrichtung mindestens eine an den oberen Bereich des Waschflüssigkeitssumpfes angeschlossene Saugleitung, eine Pumpe und mehrere in den unteren Bereich der Reaktionszone zurückführende Rückspülleitungen aufweist.

Der aus DE-C-32 27 187 bekannte Waschturm, von dem die Erfindung ausgeht, besitzt einen kegelförmig ausgebildeten Waschflüssigkeitssumpf. Bei stationärem Betrieb des Waschturms ist die Umwälzeinrichtung abgeschaltet. Sie wird nach Betriebsstillständen des Waschturms in Betrieb gesetzt, um Gipsablagerungen, die sich während eines Betriebsstillstandes in der Kegelspitze des Waschflüssigkeitssumpfes bilden, aufzuwirbeln. Durch die Umwälzeinrichtung soll es möglich sein, den Waschturm ohne Entleerung außer Betrieb zu nehmen. Damit die erforderlichen Reaktionen in der Reaktionszone ablaufen können, muß der kegelförmige Teil des Waschflüssigkeitssumpfes, der die Reaktionszone enthält, eine beachtliche Höhe aufweisen. Die Höhe des Waschflüssigkeitssumpfes trägt nicht unerheblich zur Gesamthöhe des Waschturmes bei. Mit zunehmender Höhe des Waschturmes resultieren Nachteile. So muß der Mantel zur Aufnahme größerer Kräfte bei Windeinfall verstärkt und versteift werden.

Der Erfindung liegt die Aufgabe zugrunde, die Höhe eines Waschturms der eingangs beschriebenen Art zu reduzieren, ohne dessen verfahrenstechnische Funktion zu beeinträchtigen.

Zur Lösung dieser Aufgabe lehrt die Erfindung, daß der zylindrische Waschflüssigkeitssumpf einen flachen Boden aufweist, daß die Rückspülleitungen der bei stationärem Betrieb des Waschturms arbeitenden Umwälzeinrichtung in Bodennähe am Behältermantel des Waschflüssigkeitssumpfes verteilt angeordnet sind und in den Waschflüssigkeitssumpf einmünden und daß die Einrichtung für die Zuführung von Additiven an die Umwälzeinrichtung angeschlossen ist, sodaß die Additiven über die Rückspülleitungen in die Reaktionszone einführbar sind. Die Umwälzeinrichtung arbeitet bei stationärem Betrieb des Waschturmes. Im Rahmen der erfindungsgemäßen Lehre erfüllt die Umwälzeinrichtung eine mehrfache Funktion. Sie verhindert die Ablagerung von Sedimenten. Durch die Flüssigkeitsströme, die durch die Rückspülleitungen in Bodennähe in den Waschflüssigkeitssumpf eingeführt werden, werden außerdem Strömungsbewegungen in der Reaktionszone verursacht, die zu einer beachtlichen Verbesserung des Stoffaustausches in der Reaktionszone beitragen. Die durch die Rückspülleitungen zugeführten Flüssigkeitsströme sind schließlich Träger für die Zugabe der erforderlichen Additive (zum Beispiel Kalk, Kalkstein oder auch andere Additive), die mit Hilfe der Stoffströme gleichmäßig verteilt zugeführt werden und sehr schnell mit dem Flüssigkeitsinhalt der Reaktionszone homogen vermischen.

Für die weitere Ausgestaltung der erfindungsgemäßen Lehre bestehen verschiedene Möglichkeiten. Gemäß einer ersten Ausführungsform sind die Rückspülleitungen in Bodennähe am Behältermantel verteilt angeordnet, wobei ein Teil der Rückspülleitungen tangential zum Behältermantel und der andere Teil der Rückspülleitungen radial zu diesem ausgerichtet ist. Eine andere Ausführungsform der Erfindung sieht vor, daß die Rückspülleitungen in Bodennähe über der Fläche des Bodens gleichmäßig verteilt angeordnet sind, wobei die Austrittsenden gegen den flachen Boden des Waschturms gerichtet sind. Vorzugsweise sind die Austrittsenden vertikal gegen den flachen Boden ausgerichtet. Es empfiehlt sich ferner die Austrittsenden düsenförmig zu gestalten. Der Abstand der Austrittsenden zum flachen Boden sollte das 10-30fache des Durchmessers im freien Austrittsquerschnitt der Austrittsenden betragen wobei der aus den Rückspülleitungen insgesamt austretende,auf die Fläche des Waschturmbodens bezogene Volumenstrom auf einen Wert von 5 bis 15 m³/(m²h) eingestellt ist.

Bei den zuvor beschriebenen erfindungsgemäßen Anordnungen der Rückspülleitungen resultieren sehr gleichmäßige Reaktionsbedingungen in der Reaktionszone. Die Ausbildung des Waschflüssigkeitssumpfes mit einem Flachboden in Verbindung mit den beschriebenen Maßnahmen führt im Vergleich zu dem eingangs erläuterten Stand der Technik zu einer signifikanten Reduzierung der erforderlichen Höhe des Waschflüssigkeitssumpfes.

In weiterer Ausgestaltung lehrt die Erfindung, daß an die Umwälzeinrichtung pumpendruckseitig eine zu einer Entwässerungseinrichtung führende Suspensionsabzugsleitung mit Regelventil angeschlossen ist, wobei ein hauptsächlich aus Calciumsulfat bestehender Suspensionsteilstrom taktweise oder kontinuierlich ausgeschleust wird. Die in der Umwälzeinrichtung installierte Pumpe wird zum Ausschleusen des Calciumsulfat-Suspensionsteilstromes, also für den Gipsaustrag, mitgenutzt. Aufwendige Zusatzeinrichtungen entfallen. Die Einrichtung für die Zuführung von Additiven schließt zweckmäßigerweise pumpendruckseitig und in Strömungsrichtung hinter der Suspensionsabzugsleitung an die Umwälzeinrichtung an, um Austragsverluste mit dem Gipsabzug zu vermeiden.

Die Saugleitung der Umwälzeinrichtung ist im oberen Bereich des Waschflüssigkeitssumpfes angeschlossen. Im Rahmen der Erfindung liegt es, die Saugleitung an die Oxidationszone des Waschflüssigkeitssumpfes anzuschließen. Vorzugsweise ist die Saugleitung jedoch mit kleinem Abstand unterhalb des Rostes angeordnet. Bei dieser Ausführung schließt die Umwälzeinrichtung saug- und druckseitig an die Reaktionszone an. Diese Anordnung ermöglicht eine besonders intensive Umwälzung in der Reaktionszone.

An die Umwälzeinrichtung können ferner Befüll- und Entleerungsleitungen zum Füllen bzw. Entleeren des Waschflüssigkeitssumpfes angeschlossen sein, die mit einem Restentleerungsbehälter verbunden sind. Zweckmäßigerweise ist dabei die Befülleitung auf der Saugseite der Pumpe und die Entleerungsleitung auf der Druckseite der Pumpe an die Umwälzeinrichtung angeschlossen. Mit Hilfe der in der Umwälzeinrichtung installierten Pumpe kann der Waschflüssigkeitssumpf bei Außerbetriebnahme des Waschturmes entleert und später wieder befüllt werden. Es versteht sich, daß die Befüll- und Entleerungsleitungen mit geeigneten Absperrarmaturen ausgerüstet sind. Hilfseinrichtungen mit Entleerungs- und Füllpumpe sind nicht erforderlich. Schließlich können an die Umwälzeinrichtung, vorzugsweise pumpendruckseitig, Probeentnahmeleitungen, die zu Meß- und Kontrolleinrichtungen führen, angeschlossen sein.

Im folgenden wird die Erfindung anhand einer lediglich ein Ausführungsbeispiel darstellenden Zeichnung ausführlich erläutert. Es zeigen in schematischer Darstellung
- Fig. 1: eine Vertikalschnitt durch einen erfindungsgemäßen Waschturm,
- Fig. 2: den unteren Teil des in Fig. 1 dargestellten Waschturms in vergrößerter Darstellung.
- Fig. 3: eine weitere Ausführungsform des Waschturms, ebenfalls im Vertikalschnitt durch den unteren Teil,
- Fig. 4: den Schnitt A-A in Fig. 3.

Der in den Figuren dargestellte Waschturm ist für eine Rauchgasentschwefelungsanlage hinter einer Kesselfeuerung bestimmt. Zum grundsätzlichen Aufbaus des Waschturm gehören eine von Rauchgas durchströmte und mit Waschflüssigkeit beaufschlagte Absorptionszone 1, ein Waschflüssigkeitssumpf 2 und eine Einrichtung 3 für die Waschflüssigkeitsrückführung aus dem Waschflüssigkeitssumpf 2 in die Absorptionszone 1. In dem Waschflüssigkeitssumpf 2 ist ein horizontaler Rost 4 von Sauerstoffzuführleitungen eingebaut, der eine Oxidationszone 5 oberhalb des Rostes 4 und eine Reaktionszone 6 unterhalb des Rostes 4 trennt. In noch näher beschriebener Weise sind in die Reaktionszone 6 Additive, zum Beispiel Kalk, Kalkstein und dergleichen einführbar.

Der Waschflüssigkeitssumpf 2 weist einen zylinderförmigen Mantel 7 auf und besitzt einen flachen Boden 8. An den Waschflüssigkeitssumpf 2 ist eine Umwälzeinrichtung 9 angeschlossen, die mindestens eine an den oberen Bereich des Waschflüssigkeitssumpfes 2 angeschlossene Saugleitung 10, Pumpe 11 und mehrere in den unteren Bereich der Reaktionszone zurückführende Rückspülleitungen 12 aufweist. Die Rückspülleitungen 12 münden in Bodennähe in den Waschflüssigkeitssumpf 2 ein. Die Saugleitung 10 ist mit kleinem Abstand unterhalb des Rostes 4 von Sauerstoffzuführleitungen an den Waschflüssigkeitssumpf 2 angeschlossen. Im Rahmen der Erfindung liegt es aber auch, die Saugleitung 10 in der Oxidationszone 5 anzuordnen.

An die Umwälzeinrichtung 9 ist eine Einrichtung 13 für die Zuführung von Additiven, zum Beispiel Kalk, Kalkstein und dergleichen, angeschlossen. Die Additive werden mit den Flüssigkeitsströmen durch die Rückspülleitungen 12 in Bodennähe am Umfang des Mantels 7 gleichmäßig verteilt in die Reaktionszone 6 eingeführt und vermischen sich rasch mit dem Flüssigkeitsinhalt der Reaktionszone 6. Die Zuführung der Additive erfolgt mittels einer Dosiereinrichtung 21 auf der Druckseite der in der Umwälzeinrichtung 9 installierten Pumpe 11, und zwar in Strömungsrichtung hinter einer ebenfalls an die Umwälzeinrichtung 9 angeschlossenen Suspensionsabzugsleitung 14. Die Suspensionsabzugsleitung 14 ist mit einem Regelventil 15 ausgerüstet und führt zu einer nicht dargestellten Entwässerungseinrichtung. Ein hauptsächlich aus Calciumsulfat bestehender Suspensionsteilstrom wird taktweise oder kontinuierlich mit Hilfe der Suspensionsabzugsleitung 14 ausgeschleust und in der nachfolgenden Entwässerungseinrichtung eingedickt.

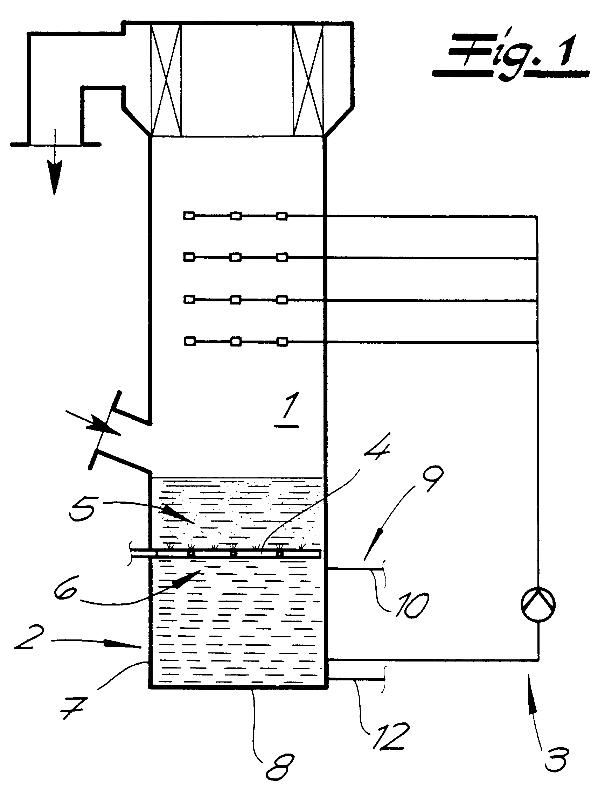

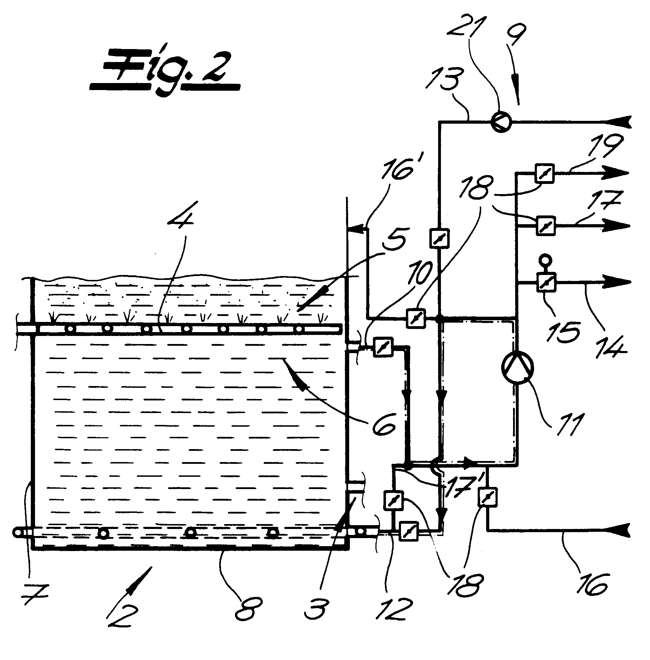

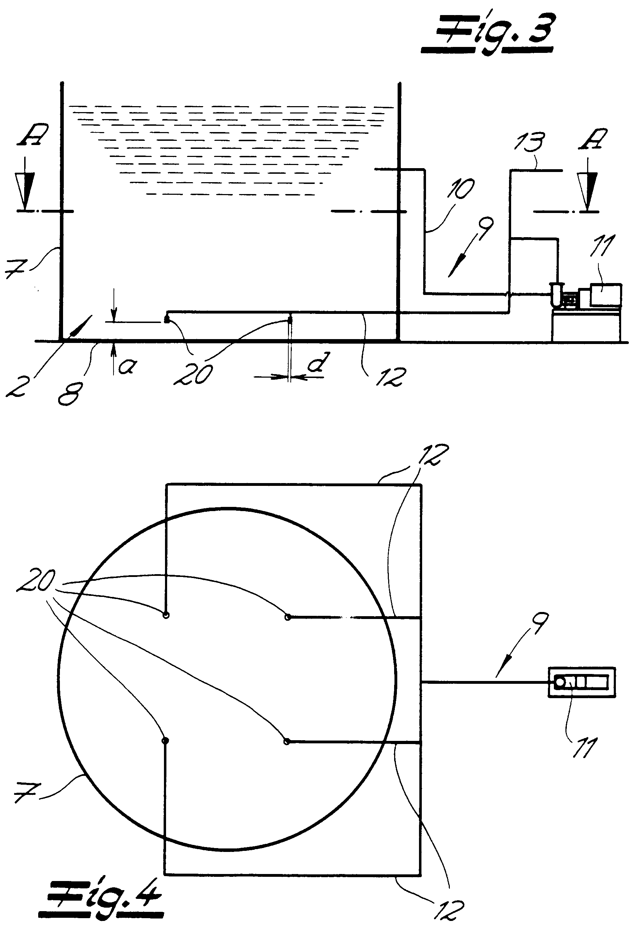

An die Umwälzeinrichtung 9 sind ferner Befüll- und Entleerungsleitungen 16, 17 zum Füllen bzw. Entleeren des Waschflüssigkeitssumpfes angeschlossen, die mit einem nicht dargestellten Restentleerungsbehälter verbunden sind. Die Befülleitung 16 ist auf der Saugseite der Pumpe 11 und die Entleerungsleitung 17 auf der Druckseite der Pumpe 11 an die Umwälzeinrichtung 9 angeschlossen (Fig. 2). Den Befüll- und Entleerungsleitungen 16, 17 sind eine oberhalb des Waschflüssigkeitssumpfes 2 an den Waschturm angeschlossene Leitung 16' zum Befüllen des Waschturmes und eine bodennah an den Waschturm angeschlossene Leitung 17' zum Entleeren des Waschturmes zugeordnet. Alle Leitungen weisen Absperrarmaturen 18 auf, die bei stationärem Betrieb des Waschturmes geschlossen sind. Schließlich sind an der Umwälzeinrichtung 9 Probeentnahmeleitungen 19 vorgesehen, die zu Auswerteeinrichtungen, beispielsweise pH-Meßgeräten, führen können.

Bei der in Fig. 2 dargestellten Ausführung der Erfindung sind die Rückspülleitungen 12 in Bodennähe am Behältermantel 7 des Waschflüssigkeitssumpfes verteilt angeordnet, wobei ein Teil der Rückspülleitungen tangential zum Behältermantel und der andere Teile der Rückspülleitungen zu diesem radial ausgerichtet ist.

Bei dem in den Fig. 3 und 4 dargestellten Ausführungsbeispiel sind die Rückspülleitungen 12 in Bodennähe über der Fläche des Bodens 8 gleichmäßig verteilt angeordnet, wobei die Austrittsenden 20 vertikal gegen den flachen Boden 8 des Waschturms gerichtet sind. Die Austrittsenden sind düsenförmig gestaltet. Der Abstand a der Austrittsenden 20 zum flachen Boden 8 beträgt das 10-30fache des im freien Austrittsquerschnitt gemessenen Durchmessers d der Austrittsenden 20. Dabei ist der aus den Rückspülleitungen 12 insgesamt austretende, auf die Fläche des Waschturmbodens bezogene Volumenstrom auf einen Wert von 5 bis 15 m³/(m²h) eingestellt. An die dargestellte Umwälzeinrichtung 9 schließen die zuvor beschriebenen Einrichtungen an, die aber aus Gründen der besseren Übersichtigkeit in den Fig. 3 und 4 nicht eingezeichnet sind. Der Waschflüssigkeitssumpf enthält ferner einen ebenfalls hier nicht dargestellten horizontalen Rost von Sauerstoffzuführleitungen, der eine Oxidationszone oberhalb des Rostes und eine Reaktionszone unterhalb des Rostes trennt.

## Patentansprüche

1. Waschturm für eine Rauchgasentschwefelungsanlage, - mit
einer von Rauchgas durchströmten und mit Waschflüssigkeit beaufschlagten Absorptionszone (1),
einem unter der Absorptionszone (1) angeordneten Waschflüssigkeitssumpf (2),
einem horizontalen Rost (4) von Sauerstoffzuführleitungen in dem Waschflüssigkeitssumpf, der eine Oxidationszone (5) oberhalb des Rostes und eine Reaktionszone (6) unterhalb des Rostes trennt,
einer Einrichtung (13) für die Zuführung von Additiven in die Reaktionszone des Waschflüssigkeitssumpfes,
einer Einrichtung (3) für die Waschflüssigkeitsrückführung aus dem Waschflüssigkeitssumpf in die Absorptionszone und
einer zusätzlichen, an den Waschflüssigkeitssumpf angeschlossenen Umwälzeinrichtung (9),
wobei aus der Reaktionszone eine hauptsächlich aus Calciumsulfat bestehende Suspension ausschleusbar ist und wobei die Umwälzeinrichtung mindestens eine an den oberen Bereich des Waschflüssigkeitssumpfes angeschlossene Saugleitung (10), eine Pumpe (11) und mehrere in den unteren Bereich der Reaktionszone zurückführende Rückspülleitungen (12) aufweist, **dadurch gekennzeichnet,** daß der zylindrische Waschflüssigkeitssumpf (2) einen flachen Boden (8) aufweist, daß die Rückspülleitungen (12) der bei stationärem Betrieb des Waschturms arbeitenden Umwälzeinrichtung (9) in Bodennähe am Behältermantel (7) des Waschflüssigkeitssumpfes (2) verteilt angeordnet sind und daß die Einrichtung (13) für die Zuführung von Additiven an die Umwälzeinrichtung (9) angeschlossen ist, sodaß die Additiven über die Rückspülleitungen (12) in die Reaktionszone (6) einführbar sind.

2. Waschturm nach Anspruch 1, dadurch gekennzeichnet, daß die Rückspülleitungen (12) in Bodennähe am Behältermantel (7) verteilt angeordnet sind, wobei ein Teil der Rückspülleitungen (12) tangential zum Behältermantel (7) und der andere Teil der Rückspülleitungen (12) radial zu diesem ausgerichtet ist.

3. Waschturm nach Anspruch 1, dadurch gekennzeichnet, daß die Rückspülleitungen (12) in Bodennähe über der Fläche des Bodens (8) gleichmäßig verteilt angeordnet sind, wobei die Austrittsenden (20) gegen den flachen Boden (8) des Waschturms gerichtet sind.

4. Waschturm nach Anspruch 3, dadurch gekennzeichnet, daß die Austrittsenden (20) vertikal gegen den flachen Boden (8) gerichtet sind.

5. Waschturm nach Anspruch 3 oder 4, dadurch gekennzeichnet, daß der Abstand jedes Austrittsendes (20) zum flachen Boden das 10-30fache des Durchmessers im freien Austrittsquerschnitt jedes Austrittsendes beträgt und daß der aus den Rückspülleitungen (12) insgesamt austretende, auf die Fläche des Waschturmbodens bezogene Volumenstrom auf einen Wert von 5 bis 15 m³/(m²h) einstellbar ist.

6. Waschturm nach einem der Ansprüche 1 bis 5, dadurch gekennzeichnet, daß an die Umwälzeinrichtung (9) pumpendruckseitig eine zu einer Entwässerungseinrichtung führende Suspensionsabzugsleitung (14) mit Regelventil (15) angeschlossen ist, wobei ein hauptsächlich aus Calciumsulfat bestehender Suspensionsteilstrom taktweise oder kontinuierlich ausschleusbar ist.

7. Waschturm nach einem der Ansprüche 1 bis 6, dadurch gekennzeichnet, daß die Einrichtung (13) für die Zuführung von Additiven pumpendruckseitig und in Strömungsrichtung hinter der Suspensionsabzugsleitung (14) an die Umwälzeinrichtung (9) anschließt.

8. Waschturm nach einem der Ansprüche 1 bis 7, dadurch gekennzeichnet, daß die Saugleitung (10) mit kleinem Abstand unterhalb des Rostes (4) von Sauerstoffzufuhrleitungen an den Waschflüssigkeitssumpf (2) angeschlossen ist.

9. Waschturm nach einem der Ansprüche 1 bis 8, dadurch gekennzeichnet, daß die Umwälzeinrichtung (9) durch Befüll- und Entleerungsleitungen (16, 17) zum Füllen bzw. Entleeren des Waschflüssigkeitssumpfes (2) mit einem Restentleerungsbehälter verbunden sind, wobei die Befülleitung (16) auf der Saugseite der Pumpe (11) und die Entleerungsleitung (17) auf der Druckseite der Pumpe (11) an die Umwälzeinrichtung (9) angeschlossen ist.

## Claims

1. A scrubbing tower for a flue gas desulphurisation installation, having
an absorption zone (1) through which flue gas flows and which is impinged upon by scrubbing liquid,
a scrubbing liquid sump (2) disposed under the absorption zone (1),
a horizontal grid (4) of oxygen feed lines in the scrubbing liquid sump, which grid separates an oxidation zone (5) above the grid from a reaction zone (6) below the grid,
a device (13) for the supply of additives into the reaction zone of the scrubbing liquid sump,
a device (3) for recycling scrubbing liquid from the scrubbing liquid sump into the absorption zone, and
an additional circulating device (9) connected to the scrubbing liquid sump,
wherein a suspension mainly consisting of calcium sulphate can be transferred out of the reaction zone and wherein the circulating device comprises at least one suction line (10) connected to the upper region of the scrubbing liquid sump, a pump (11) and a plurality of back-flushing lines (12) leading back into the lower region of the reaction zone, characterised in that the cylindrical scrubbing liquid sump (2) has a flat base (8), that the back-flushing lines (12) of the circulating device (9), which operates during the steady-state operation of the scrubbing tower, are disposed distributed on the container shell (7) of the scrubbing liquid sump (2) in the vicinity of the base, and that the device (13) for supplying additives is connected to the circulating device (9), so that the additives can be introduced into the reaction zone (6) via the back-flushing lines (12).

2. A scrubbing tower according to claim 1, characterised in that the back-flushing lines (12) are disposed distributed on the container shell (7) in the vicinity of the base, wherein one part of the back-flushing lines (12) is aligned tangentially in relation to the container shell (7) and the other part of the back-flushing lines (12) is aligned radially in relation thereto.

3. A scrubbing tower according to claim 1, characterised in that the back-flushing lines (12) are disposed in the vicinity of the base and uniformly distributed over the area of the base (8), wherein their outlet ends (20) are oriented towards the flat base (8) of the scrubbing tower.

4. A scrubbing tower according to claim 3, characterised in that the outlet ends (20) are oriented vertically towards the flat base (8).

5. A scrubbing tower according to claim 3 or 4, characterised in that the distance of each outlet end (20) from the flat base is 10-30 times the diameter of the free outlet cross-section of each outlet end, and that the total volume flow emerging from the back-flushing lines (12) can be adjusted to a value of 5 to 15 m³/m²h with respect to the area of the scrubbing tower base.

6. A scrubbing tower according to any one of claims 1 to 5, characterised in that a suspension take-off line (14) which has a control valve (15) and which leads to a dewatering device is connected to the circulating device (9) on the pump pressure side, wherein a partial suspension stream which mainly consists of calcium sulphate can be transferred out periodically or continuously.

7. A scrubbing tower according to any one of claims 1 to 6, characterised in that the device (13) for supplying additives is connected to the circulating device (9) on the pump pressure side and behind the suspension take-off line (14) in the direction of flow.

8. A scrubbing tower according to any one of claims 1 to 7, characterised in that the suction line (10) is connected to the scrubbing liquid sump (2) at a short distance below the grid (4) of oxygen supply lines.

9. A scrubbing tower according to any one of claims 1 to 8, characterised in that the circulating device (9) is connected to a residue emptying container for filling and emptying the scrubbing liquid sump (2) by filling and emptying lines (16, 17), wherein the filling line (16) is connected to the circulating device (9) on the suction side of the pump (11) and the emptying line (17) is connected to the circulating device on the pressure side of the pump (11).

## Revendications

1. Tour de lavage pour une installation de désulfuration de gaz de fumées, - comportant une zone d'absorption (1) traversée par les gaz de fumées
et chargée par un liquide de lavage,
une cuve (2) contenant le liquide de lavage disposée au-dessous de la zone d'absorption (1),
une grille horizontale (4) formée par des canalisations d'amenée d'oxygène et disposée dans la cuve de liquide de lavage et qui sépare une zone d'oxydation (5) située au-dessus de la grille et une zone de réaction (6) située au-dessous de la grille,
un dispositif (13) pour l'amenée d'additifs dans la zone de réaction de la cuve contenant le liquide de lavage,
un dispositif (5) pour renvoyer le liquide de lavage depuis la cuve contenant le liquide de lavage dans la zone d'absorption, et
un dispositif supplémentaire de recirculation (9) raccordé à la cuve contenant le liquide de lavage, et
dans laquelle une suspension constituée principalement par du sulfate de calcium peut être évacuée de la zone réactionnelle et le dispositif de recirculation comporte au moins une canalisation d'aspiration (10) raccordée à la partie supérieure de la cuve contenant le liquide de lavage, une pompe (11) et plusieurs canalisations de balayage de retour revenant dans la partie inférieure de la zone réactionnelle,
caractérisée en ce que la cuve cylindrique (2) contenant le liquide de lavage comporte un fond plat (8), que les canalisations de balayage de retour (12) du dispositif de recirculation (9), qui travaillent dans le cas du fonctionnement stationnaire de la tour de lavage, sont disposées d'une manière répartie à proximité du sol sur l'enveloppe formant récipient (7) de la cuve (2) contenant le liquide de lavage, et que le dispositif (13) pour l'envoi d'additifs est raccordé au dispositif de recirculation (9), de sorte que les additifs peuvent être introduits dans la zone réactionnelle (6) par l'intermédiaire des canalisations de balayage de retour (12).

2. Tour de lavage selon la revendication 1, caractérisée en ce que les canalisations de balayage en retour (12) sont disposées d'une manière répartie à proximité du sol sur l'enveloppe formant récipient (7), une partie des canalisations de balayage de retour (12) étant dirigée tangentiellement par rapport à l'enveloppe formant récipient (7) et l'autre partie des canalisations de balayage de retour (12) s'étend radialement par rapport à cette enveloppe.

3. Tour de lavage selon la revendication 1, caractérisée en ce que les canalisations de balayage de retour (12) sont disposées en étant réparties de façon uniforme à proximité du fond (8) au-dessus de la surface de ce dernier, les extrémités de sortie (20) étant dirigées vers le fond plat (8) de la tour de lavage.

4. Tour de lavage selon la revendication 3, caractérisée en ce que les extrémités de sortie (20) sont dirigées verticalement vers le fond plat (8).

5. Tour de lavage selon la revendication 3 ou 4, caractérisée en ce que la distance entre chaque extrémité de sortie (20) et le fond plat est égale à 10 - 30 fois le diamètre dans la section transversale de sortie libre de chaque extrémité de sortie et que le flux volumique, qui sort globalement des canalisations de balayage de retour (12) et rapporté à la surface du fond de la tour de lavage, peut être réglé sur une valeur de 5 à 15 m³/(m²h).

6. Tour de lavage selon l'une des revendications 1 à 5, caractérisée en ce qu'une canalisation (14) d'évacuation de la suspension, qui aboutit à un dispositif de déshydratation, est raccordée par une soupape de régulation (15) au dispositif de recirculation (9), sur le côté refoulement de la pompe, à un courant partiel de la suspension, constitué principalement par du sulfate de calcium, pouvant être exclu d'une manière cadencée ou bien continûment.

7. Tour de lavage selon l'une des revendications 1 à 6, caractérisée en ce que le dispositif (13) pour l'envoi d'additifs se raccorde au dispositif de recirculation (9), du côté de la pompe de refoulement et en arrière de la canalisation (14) de soutirage de la suspension, dans la direction d'écoulement.

8. Tour de lavage selon l'une des revendications 1 à 7, caractérisée en ce que la canalisation d'aspiration (10) est raccordée à la cuve (2) contenant le liquide de lavage, à une faible distance au-dessous de la grille (4) formée de canalisations d'amenée d'oxygène.

9. Tour de lavage selon l'une des revendications 1 à 8, caractérisée en ce que le dispositif de recirculation (9) est relie par des canalisations de remplissage et de vidage (16,17) servant à remplir ou à vider la cuve (2) contenant le liquide de lavage, à un récipient de vidage résiduel, la canalisation de remplissage (16) étant raccordée, sur le côté aspiration de la pompe (11), au dispositif de recirculation (9), tandis que la canalisation de vidage (17) est raccordée, sur le côté refoulement de la pompe (11), au dispositif de recirculation (9).
